# EUROPEAN PATENT SPECIFICATION

(11) **EP 1 593 309 B1**
(45) Date of publication and mention of the grant of the patent: **25.06.2014**
(21) Application number: 04076376.5
(22) Date of filing: 07.05.2004
(51) Int. Cl.: A23C 9/123, A23C 19/032

(54) **Dairy product with at least one characteristic of a dairy product mixture**
Milchprodukt mit zumindest einem Kennzeichen einer Milchproduktmischung
Produit laitier ayant au moins une caractéristique d'un produit laitier composé

(43) Date of publication of application: 09.11.2005
(73) Proprietor: Friesland Brands B.V., 3818 LE Amersfoort (NL)
(72) Inventor: Looijesteijn, Petronella Johanna, 8014 MD Zwolle (NL); Alkema, Audrey, 3925 ET Scherpenzeel (NL); van Hekezen, Maria Adriana, 6715 EL Ede (NL); Sikkema, Jan, 9483 PC Zeegse (NL); Nauta, Arjen, 6721 CG Bennekom (NL)
(74) Representative: Jansen, Cornelis Marinus

(56) References cited:
- WO-A-93/02565
- WO-A-98/54337
- DE-A- 3 727 680
- FR-A- 2 112 160
- GB-A- 1 043 194
- GB-A- 1 445 095
- US-A- 4 963 370

## Description

The present invention relates to the preparation of a dairy product with a taste like, or substantially indistinguishable from, the taste of a mixture of yoghurt and quark.

Fermented milk products are widely used in many different forms and their consumption has dramatically increased during the last 50 years. They are known to provide beneficial effects, mainly due to the presence of lactic acid bacteria which are capable of colonizing the gastrointestinal tract and improving intestinal health. Lactic acid bacteria lower both the carbohydrate content of the foods they ferment, and the pH due to lactic acid formation. The pH often drops low enough to inhibit the growth of various human pathogens. A wide variety of dairy products continues to be developed in order to meet the demands of a critic and health-conscious public. Today, yoghurt and quark are two popular dairy products.

Yoghurt production usually involves the fermentation of milk by a yoghurt producing culture. A yoghurt producing culture is defined as a culture of at least one kind of micro-organism, often comprising a lactic acid bacterium, capable of converting a starter medium, such as milk, into yoghurt. Commonly, said yoghurt producing culture comprises *Streptococcus thermophilus.* Said yoghurt producing culture preferably comprises *Streptococcus thermophilus* and *Lactobacillus,* most preferably *Streptococcus thermophilus* and *Lactobacillus delbrueckii* subspecies *bulgaricus.* In this combination, protocooperation occurs: when cultured together, they stimulate one another's growth, producing the texture and taste characteristic for the product. The main metabolic products of these organisms are lactate, flavor compounds (e.g. acetaldehyde and diacetyl) and sometimes exopolysaccharide. Fermentation of milk usually takes place at about 40-45° C (short-set) or at about 30-37° C (long-set). Yoghurt usually has a protein content of about 3-4% (Renner et al, 1992). GB patent 1,043,194 discloses the preparation of dehydrated yoghurt in order to prolong storage time. Starter cultures comprising *Streptococcus thermophilus* and *Lactobacillus bulgaricus* are used for inoculating pasteurized milk, followed by fermentation. The product is subsequently dried. Upon reconstitution of the dried product, a dairy product with a typical yoghurt flavour is obtained.

At present, the commercial process of yoghurt production uses defined mixed starter cultures consisting of *Streptococcus thermophilus* and *Lactobacillus.* In some countries yoghurt-equivalent products contain other organisms. For example, in India other bacteria *(Lb. plantarum* and *Lactococcus lactis* subsp. *lactas)* are used for the production of dahi (Marshall 1984), while Chander *et al* (1992) have used only mixed cultures comprising *Lactococcus lactis* biovar. *diacetylactis* and *Lactococcus lactis* subsp. *cremoris.* Furthermore, the Scandinavian dairy products viili and longfil are prepared using *Lactobacillus lactis* as starter bacterium. Other non-limiting examples of yoghurt-equivalent products are kefir, koumiss filmjölk and leben. Preferably, said yoghurt-equivalent product is obtained by fermentation of milk by lactic acid bacteria.

The combination of *Streptococcus thermophilus* and *Lactobacillus* is often referred to as the yoghurt culture. Ra 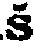 i 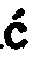 and Kurmann (1978) summarised the findings concerning the original yoghurt microflora, and divided it into three groups: a) essential microflora consisting of *Streptococcus thermophilus* and *Lactobacillus delbrueckii* spp *bulgaricus,* b) non-essential microflora represented by homofermentative lactic acid strains other than in the first group and by heterofermentative lactic acid bacteria of which some may be used dietetic beneficially by supplementing the original microflora in the gastrointestinal tract, and c) contaminants: yeast, moulds, coliforms and other undesirable micro-organisms.

Quark is an unripened fresh cheese usually made from pasteurized fluid skim milk or reconstituted skim milk powder, cultured with lactic acid starter (typically containing *Lactococcus lactis* subsp. *lactis* / *Lactococcus lactis* subsp. *cremoris* bacteria) and a small amount of rennet. A coagulum usually starts setting at about pH 5.7 and continues during decreasing of the pH. After the coagulum has been stirred, quark production usually starts with thermisation and cooling to about 37°C. The acid curd is separated from the whey by bag drainage or by centrifugal force in mechanical curd concentrators. Quark usually has a protein content of about 8-13% (Renner et al, 1992).

In order to provide a dairy product with both yoghurt and quark characteristics, yoghurt and quark are currently mixed in order to produce a composition which has a thick structure and a creamy yoghurt and quark taste. Commercially available quark/yoghurt mixtures usually contain up to 20% yoghurt. For the production of such a dairy product, yoghurt and quark have to be separately produced. Subsequently, the yoghurt and quark have to be properly mixed. This involves the use of separate facilities for yoghurt and quark production and the use of further installations capable of mixing the yoghurt and quark fractions until a homogenous, creamy substance is obtained.

It is an object of the present invention to provide an alternative for the production of a dairy product with a taste like, or substantially indistinguishable from, the taste of a mixture of yoghurt and quark in a ratio of between 1:10 and 10:1. Preferably an alternative for the production of a dairy product having a thick structure and a creamy yoghurt and quark taste is provided.

It has surprisingly been found that a dairy product having a thick structure and a creamy yoghurt and quark taste can be obtained by means of a single fermentation. According to the present invention, a combination of a yoghurt producing culture and a quark producing culture is capable of converting a starter medium into a dairy product with both a yoghurt and quark taste. Although yoghurt is normally produced with different conditions (such as pH, temperature) and with different micro-organisms as compared to quark, the present inventors have nevertheless demonstrated that it is possible to combine a yoghurt producing culture and a quark producing culture in a single fermentation process in order to produce a dairy product with both a yoghurt and quark taste and/or texture. Hence, although yoghurt and quark are normally produced with different conditions, it has been shown by the present inventors that one set of conditions is suitable for a fermentation reaction with both a yoghurt producing culture and a quark producing culture and that a dairy product is produced with a taste like, or substantially indistinguishable from, the taste of a mixture of yoghurt and quark in a ratio of between 1:10 and 10:1. This obviates the need for mixing of separately produced yoghurt and quark. Hence, the present invention allows a cheaper and more efficient production with less equipment since a stirring installation is no more necessary.

The invention provides a use of a yoghurt producing culture and a quark producing culture for converting a starter medium into a dairy product with a yoghurt and quark taste.
As defined above, a yoghurt producing culture is a culture of at least one kind of micro-organism, comprising a lactic acid bacterium, capable of converting a starter medium (preferably milk) into yoghurt. A quark producing culture is defined as a culture of at least one kind of micro-organism, comprising a lactic acid bacterium, capable of converting a starter medium (preferably milk) into quark. A starter medium is a medium that is capable of being converted into yoghurt and/or quark. Preferably said starter medium is a liquid. Said starter medium preferably comprises milk from a mammal such as, but not limiting to, the milk of a cow, goat, sheep, mare and/or yak. In order to obtain desired characteristics such as a desired protein and/or fat content, said milk may be concentrated or diluted, and/or additional components such as for instance saccharose and/or starch may be added to the milk. In one embodiment, said starter culture comprises soy milk. In a preferred embodiment said starter medium is heated in order to at least partly destroy harmful organisms. Preferably, pasteurized milk is used.
A dairy product with a yoghurt and a quark taste is defined herein as a dairy product having a taste like, or significantly indistinguishable from, the taste of a composition which has been produced by mixing separately produced yoghurt and quark in a ratio of between 1:10 and 10:1, preferably in a ratio of between 1:5 and 5:1, more preferably in a ratio of between 1:2 and 2:1, more preferably in a ratio of about 1:1. Most preferably, a dairy product with a yoghurt and a quark taste of the present invention has a taste like, or significantly indistinguishable from, the taste of a composition comprising about 5-30%, more preferably 10-25%, most preferably about 15-20% yoghurt which has been produced by mixing separately produced yoghurt and quark.

In a preferred embodiment said yoghurt producing culture comprises *Streptococcus thermophilus* and *Lactobacillus.* Most preferably, said yoghurt producing culture comprises *Streptococcus thermophilus* and *Lactobacillus delbrueckii* subsp. *bulgaricus.* As outlined above, these strains are commonly used in order to obtain a symbiotic relationship, where each species stimulates the growth of the other. This interaction results in a shortened fermentation time.

Said quark producing culture preferably comprises *Lactococcus lactis*, *Lactococcus lactis subsp. cremoris, Lactococcus lactis subsp. lactis, Lactococcus lactis* subsp. *lactis* biovar. *diacetylactis,* and/or *Leuconostoc* spp.
A preferred embodiment provides a use of the invention wherein said quark producing culture comprises *Lactococcus.* More preferably, said quark producing culture comprises *Lactococcus lactis*. As is shown in the examples, a combination of a yoghurt producing culture with *Lactococcus* results in a preferred dairy product, having a particularly good taste.
In another preferred embodiment said quark producing culture comprises *Lactococcus lactis* subspecies *lactis*. A combination of a yoghurt producing culture with *Lactococcus lactis* subspecies *lactis* also results in a preferred dairy product, having a particularly good taste, as shown in the examples. In another preferred embodiment said quark producing culture comprises *Lactococcus lactis* subspecies *cremoris* and/or *Lactococcus lactis* subspecies *lactis* biovar diacetylactis.
In yet another aspect of the invention said quark producing culture comprises *Leuconostoc.* Preferably, said quark producing culture comprises *Leuconostoc mesenteroides.* The addition of *Leuconostoc mesenteroides,* in combination with *Lactococcus,* allows the production of a dairy product with a sparkling taste due to the gas produced by *Leuconostoc* and/or *Lactococcus, preferably Lactococcus lactis* subsp. *lactis* biovar. *diacetylactis.*
In a particularly preferred embodiment, said quark producing culture comprises *Lactococcus lactis* and *Lactococcus lactis* subsp. *cremoris.*
In one embodiment said quark producing culture is essentially not proteolytic, such that it does not, or to a small extent, break down the protein content of the dairy product. Moreover, in one embodiment said quark producing culture is not, or to a small extent, capable of producing exopolysaccharide (EPS) and/or capsular exopolysaccharide (CPS), since the production of too much EPS and/or CPS can result in a product whose structure is too long. Moreover, said quark producing culture is preferably not, or to a small extent, capable of producing any off-flavors.

According to the present invention, a yoghurt producing culture and a quark producing culture are capable of converting a starter medium into a dairy product with a taste like, or substantially indistinguishable from, the taste of a mixture of yoghurt and quark in a ratio of between 1:10 and 10:1. Said dairy product preferably has both a yoghurt and quark taste. In one aspect said dairy product has a mouthfeel between the mean mouthfeel of yoghurt and quark.
Furthermore, said dairy product preferably has a protein content which lies between the mean protein content of yoghurt and quark. Preferably, the protein content of a product of the present invention is between about 3 and 13 %, more preferably between about 4 and 11 %.
Moreover, said dairy product preferably comprises a structure which is between the short structure of quark and the long structure of yoghurt.
Of course, the preferences of different people vary, such that each individual will have its own preferred kind of dairy product of the present invention. A dairy product of the present invention may therefore be provided with additional ingredients such as fruit, sugar, cacao, vitamins, calcium, etcetera. In one aspect a dairy product of the invention comprises a lowered lactose content as compared to normal yoghurt, like childrensyoghurt (Renner et al, 1992). A lactose content of between 3.5 and 4.0 % is preferred.

In one embodiment a yoghurt producing culture and a quark producing culture are essentially simultaneously administered to said starter medium. This means that a starter medium, preferably milk, is either inoculated with a mixture of said yoghurt producing culture and said quark producing culture, or inoculated with said yoghurt producing culture and inoculated with said quark producing culture within a short time span of approximately one hour, preferably within 30 minutes, more preferably within 15 minutes, most preferably within 5 minutes. Alternatively, said starter medium is firstly provided with a yoghurt producing culture and subsequently with a quark producing culture. This means that yoghurt production is started by inoculation of a starter medium, preferably milk, with a yoghurt producing culture. Afterwards, for instance after 1-3 days, preferably after 1-48 hours, more preferably after 1-24 hours, more preferably after 1-5 hours, most preferably after 1-2 hours, a quark producing culture is provided.
In yet another embodiment quark production is started by providing said starter medium, preferably milk, with a quark producing culture. Subsequently, for instance after 1-3 days, preferably after 1-48 hours, more preferably after 1-24 hours, more preferably after 1-5 hours, most preferably after 1-2 hours, a yoghurt producing culture is provided.

Said starter medium is in a preferred embodiment provided with at least one additional probiotic strain, which beneficially affects the host by improving its intestinal microbial balance. Non-limiting examples of such probiotic strains are *Bifidobacterium, Propionibacterium* and *Lactobacillus acidophilus*. Said starter medium is also preferably provided with at least one additional prebiotic, which is defined as a food ingredient that benefits the host by selectively stimulating the growth and/or activity of health-promoting bacteria over undesirable or pathogenic micro-organisms. Non-limiting examples of such prebiotics are galacto oligosaccharide (GOS) and fructo oligosaccharide (FOS).

Said starter medium is preferably fermented by a yoghurt producing culture at a temperature which is suitable for the production of yoghurt. A dairy product with a sufficiently long structure associated with a good mouth feel is obtained. In one embodiment of the invention said starter medium is fermented at a temperature of about 40-45 °C. In another embodiment of the invention said starter medium is fermented at a temperature of about 30-40 °C, preferably of about 30-37 °C, more preferably of about 31-33 °C, more preferably of about 32 °C. In order to ferment at a temperature which is suitable for the production of yoghurt, said adjunct culture capable of converting a starter medium into a second dairy product preferably comprises a mesophilic culture.
Alternatively, said starter medium is fermented at a temperature which is suitable for the production of quark. This is especially suitable when quark production is started and subsequently, for instance after 1-3 days, preferably after 1-72 hours, more preferably after 1-24 hours, a yoghurt producing culture is added. In one embodiment of the invention said starter medium is fermented at a temperature of about 20-30 °C, preferably at a temperature of about 23-25 °C.

In one embodiment a dairy product of the invention is of the liquid type. A dairy product is converted into a dairy product of the liquid type using common technologies. The process can vary depending on the demanded characteristics of the end product. A dairy product of the liquid type is produced as described before and is preferably exposed to shear, for instance by mixing, Ultra Turax, pressure valve or homogenisation. Either low or high shear can be used, for instance homogenisation at low pressure (preferably 5-25 bar) or high pressure (preferably 100-200 bar). Stabilising agents that are effective at low pH, such as for instance pectin, is optionally used to decrease sedimentation. Fruit preparations are optionally added, for instance via a batch process and/or via in-line dosages, preferably in doses between 1 and 99%, more preferably between 1 and 30%. The present invention allows for the production of a drinking quark-yoghurt with a smooth mouthfeeling and a mild taste as a result of the combined quark-yoghurt fermentation.

In one aspect of the invention said dairy product is homogenized after the fermentation reaction. Preferably, said dairy product is homogenized in the presence of pectin.

In one embodiment the invention uses a method for producing a dairy product having a yoghurt and quark taste, comprising:
- inoculating a starter medium with a yoghurt producing culture and a quark producing culture, and
- fermenting said starter medium.
Said yoghurt producing culture preferably comprises *Streptococcus thermophilus* and *Lactobacillus,* more preferably *Streptococcus thermophilus* and *Lactobacillus bulgaricus.* In a most preferred embodiment a *Lactobacillus delbrueckii susp. bulgaricus* strain is used that is a mild fermenting and high polysaccharide forming strain. Said starter medium preferably comprises milk, more preferably pasteurized milk. Said milk preferably has a fat content of about 0-15%, preferably 0-5%, and a protein content of about 2-12 %, preferably 3-5%. In one embodiment saccharose and starch are added to the milk.
Said quark producing culture preferably comprises *Lactococcus lactis, Lactococcus lactis* subsp. *cremoris, Lactococcus lactis* subsp. *lactis, Lactococcus lactis* subsp. *lactis* biovar. *diacetylactis,* and/or *Leuconostoc* spp. More preferably, said quark producing culture comprises *Lactococcus lactis* or *Lactococcus lactis* subsp. *lactis.*

The invention furthermore provides a use of the invention wherein said starter medium is fermented at a temperature of about 30-37°C, preferably at a temperature of about 32°C, because such temperature is especially suitable for the production of a dairy product of the invention with a long structure associated with a good mouth feel. In another embodiment said starter medium is fermented at a temperature of about 25-28°C, which temperature is suitable for the production of quark.
The starter medium is preferably incubated until a pH of about 3.0-5.0, preferably 3.9-5.0, more preferably 3.9-4.6, more preferably 4.3-4.5 is reached.

In one embodiment a yoghurt producing culture and a quark producing culture are essentially simultaneously administered to said starter medium. Alternatively, said starter medium is firstly provided with said yoghurt producing culture and subsequently with said quark producing culture, or said starter medium is firstly provided with said quark producing culture and subsequently with said yoghurt producing culture.
Said starter culture is preferably provided with at least one additional probiotic strain and/or with at least one prebiotic.

The invention is further explained in the following examples. The examples do not limit the scope of the invention; they merely serve to exemplify the invention.

### Examples

### Experimental:

*Milk:* Saccharose (5.7%) and starch (1.0%) are added to milk containing 3.54% protein and 1.61% fat. If necessary, the milk was standardised with water. The final milk contained 1.5% fat and 3.3% protein. After the addition of starch and saccarose, the milk was heated to 75°C and homogenised at 130 bar. The milk was heat-treated by means of a batch pasteurisation for 5 minutes at 90°C.

*Fermentation:* The milk was inoculated with 0.02% *Streptococcus thermophilus* and *Lactobacillus delbrueckii* subspecies *bulgaricus* mix (a *Lactobacillus delbrueckii susp. bulgaricus* strain that is a mild fermenting and high polysaccharide forming) and various different adjunct cultures (see lists below) and incubated at 32°C until a pH of 4.45 was reached (in about 14 hours). The fermented milk was stirred and cooled to 15°C. Fiver bottles of one litre and 5 beakers of 200 ml were filled with the fermentation product obtained. They were placed in ice-water after filling for 2 hours in order to cool them to a temperature of about 7°C.

*Preculturing:* The adjunct cultures were precultured (1% from frozen stock culture) in sterile milk (containing 0.25% of casiton and 0.2% of yeast extract for the proteolytic negative strains) for ca. 20h at 20°C for the Lactococci (until coagulation occurs) and about 55 h at 25°C for the leuconostocs.

*Analysis:* The fermentation products were subjected to several analysis in order to determine pH, amount of serum in time, taste, texture and microbiological composition:

### Viscosity

Viscosity was determined by using a Posthumus funnel.
Product present in funnel is placed for 1 hour in a waterbath of 20°C after which the bottle is swung 3 times. A posthumus funnel with an opening with a diameter of 8 mm is filled until indicated line (=360 ml). It is determined how long it takes before the product has flew out of the Posthumus (Posthumus, 1954).

### Microbiological composition

Rogosa agar was used to determine the number of Lactocobacilli
Per liter 82 gram of Rogosa agar (Oxoid CM627) was used. In addition, 1.25 ml acetic acid (99-100% Boom 51830) was added.

LM17 agar (Terzaghi) was used to determine the number of Lactococci and Streptococci.
Per liter demiwater, 55 g of M17 agar (Merck 15108) was used.

### Results experiment I.

The adjunct cultures that were tested:
1. -
2. 1% *Lactococcus lactis* FCDF0200 (proteolytic)
3. 1% *Lactococcus lactis* FCDF0201 (not proteolytic)
4. 1% *Lactococcus lactis* FCDF0413 (EPS-producing, proteolytic)
5. 1% *Lactococcus lactis* subsp. *lactis* biovar. *diacetylactis* FCDF0202 (moderatly proteolytic)
6. 1% *Lactococcus lactis* subsp. *lactis* biovar. *diacetylactis* FCDF0203 (not proteolytic)
7. 1%*Lactococcus lactis* subsp. *lactis* biovar. *diacetylactis* FCDF0204 (not proteolytic)
8. 1% *Leuconostoc mesenteroides* FCDF4007
9. 1% *Leuconostoc mesenteroides* FCDF4100 (EPS-producing)
10. 0.5% *Leuconostoc mesenteroides* FCDF4007 and 0.3% *Lactococcus lactis* FCDF0201

| Culturing: | |
|---|---|
| Variant | Acidification time (h) |
| 1 | 17.5 |
| 2 | 14 |
| 3 | 14 |
| 4 | 14 |
| 5 | 14 |
| 6 | 16 |
| 7 | 14 |
| 8 | 21.5 |
| 9 | 20 |
| 10 | 16 |

| Posthumus-viscosity at day 1 at 20°C: | | | |
|---|---|---|---|
| variant | 1 (sec) | 2 (sec) | Average (sec) |
| 1 | 52 | 45.52 | 48.76 |
| 2 | 19.28 | 15.19 | 17.24 |
| 3 | 25.97 | 20.06 | 23.02 |
| 4 | 92 | 77.14 | 84.57 |
| 5 | 30.66 | 32.09 | 31.38 |
| 6 | 32.52 | 31.72 | 32.12 |
| 7 | 24.07 | 22.87 | 23.47 |
| 8 | 47.56 | 46.31 | 46.94 |
| 9 | 42.41 | 42.97 | 42.69 |
| 10 | 21.19 | 23.69 | 22.44 |

| pH in time: | | | | | | |
|---|---|---|---|---|---|---|
| variant | pH after filling | pH day 1 | pH 1 week | pH 2 weeks | pH 3 weeks | pH 4 weeks |
| 1 | 4.46 | 4.41 | 4.37 | 4.30 | 4.22 | 4.30 |
| 2 | 4.31 | 4.29 | 4.32 | 4.24 | 4.29 | 4.21 |
| 3 | 4.42 | 4.36 | 4.37 | 4.33 | 4.34 | 4.34 |
| 4 | 4.34 | 4.33 | 4.34 | 4.33 | 4.30 | 4.32 |
| 5 | 4.43 | 4.39 | 4.37 | 4.33 | 4.37 | 4.36 |
| 6 | 4.45 | 4.43 | 4.36 | 4.38 | 4.38 | 4.38 |
| 7 | 4.44 | 4.41 | 4.36 | 4.37 | 4.36 | 4.35 |
| 8 | 4.54 | 4.48 | 4.37 | 4.36 | 4.37 | 4.37 |
| 9 | 4.47 | 4.43 | 4.34 | 4.32 | 4.32 | 4.33 |
| 10 | 4.45 | 4.45 | 4.44 | 4.44 | 4.43 | 4.43 |

| Sensoric analysis at day 1 and day 21: | | |
|---|---|---|
| Variant | Day 1 | Day 21 |
| 1 | Smooth, creamy, yoghurt, good reference | Good reference yoghurt |
| 2 | Undesired rough structure, no option | Not tested |
| 3 | Smooth, thin, short, fresh quark taste | Good quark yoghurt flavour, short structure, somewhat thicker is |
| 4 | Long structure, sticky, no option | desired Not tested |
| 5 | Buttermilk yoghurt, acid flavour, gas bubbles, no option | Not tested |
| 6 | Long structure, smooth, gas bubbles, quark flavour | No option because of gas bubbles resulting in twinkling |
| 7 | Gas bubbles, undesired flavour, thin, no option | Not tested |
| 8 | Long, creamy, thick, sticky, some gas bubbles | Sticky, mild, fresh, twinkling |
| 9 | Long structure, mild, slimy | Too long structure |
| 10 | Short structure, smooth, somewhat quark flavour and mouthfeel, too thin, twinkling, good option | Gas bubbles, undesired flavour |

| Microbiological analysis at day 1: | | | | |
|---|---|---|---|---|
| variant | *St. thermophilus* | *Lb. bulgaricus* | *L. lactis* | Leuconostoc |
| 1 | 8.1 * 10⁸ | 1.8 * 10⁶ | ND | ND |
| 2 | 3.5 * 10⁸ | 2.4 * 10⁵ | 1.2 * 10⁹ | ND |
| 3 | 2.7 * 10⁸ | 1.2 * 10⁵ | 2.4 * 10⁸ | ND |
| 4 | 3.6 * 10⁸ | 3.0 * 10⁵ | 2.7 * 10⁸ | ND |
| 5 | 5.5 * 10⁸ | 1.9 * 10⁵ | 9.3 * 10⁸ | ND |
| 6 | 5.3 * 10⁸ | 1.5 * 10⁵ | 1.3 * 10⁹ | ND |
| 7 | 4.2 * 10⁸ | 1.6 * 10⁵ | 6.2 * 10⁸ | ND |
| 8 | 9.3 * 10⁸ | 8.0 * 10⁵ | ND | 6.0 * 10⁷ |
| 9 | 1.2 * 10⁹ | 8.8 * 10⁵ | ND | 2.4 * 10⁷ |
| 10 | 6.4 * 10⁸ | 2.2 * 10⁵ | 4.7 * 10⁸ | 2.0 * 10⁷ |

| Microbiological analysis at day 21: | | | | |
|---|---|---|---|---|
| variant | *St. thermophilus* | *Lb. bulgaricus* | *L. lactis* | *leuconostoc* |
| 1 | 1.0 * 10⁹ | 8.2 * 10⁵ | ND | ND |
| 2* | 1.1 * 10⁸ | 2.4 * 10⁵ | 2.1^{*} 10⁷ | ND |
| 3 | 1.8 * 10⁸ | 7.8 * 10⁴ | 8.0 * 10⁵ | ND |
| 4 | 1.1 * 10⁸ | 1.2 * 10⁵ | 3.7 * 10⁶ | ND |
| 5 | 5.6 * 10⁷ | 2.5 * 10⁵ | 1.7 * 10⁸ | ND |
| 6 | 6.2 * 10⁷ | 2.0 * 10⁵ | 8.9 * 10⁸ | ND |
| 7 | 1.5 * 10⁸ | 2.1 * 10⁵ | 9.3 * 10⁷ | ND |
| 8 | 8.2 * 10⁷ | 7.4 * 10⁵ | ND | 1.3 * 10⁷ |
| 9 | 1.5 * 10⁹ | 1.6 * 10⁶ | ND | 2.6 * 10⁷ |
| 10 | 3.6 * 10⁸ | 3.8 * 10⁵ | 3.7 * 10⁷ | 9.4 * 10⁶ |
| ND: not determined | | | | |

### Serum:

The amount of serum was negligible. No serum was detected for variants 2, 3, 5, 6 and 9. The highest amount (2-3 mm, for a product height of 9 cm) was found for variant 4. For all the other variants the amount of serum was 1-2 mm.

### Conclusions

It is possible to produce quarkyoghurt with the desired properties by the fermentation of milk with a yoghurt culture and additional quark producing culture. Variant 3 and 10 showed the best potentials. Variations of these two variants are tested in a further experiment.

### Results experiment II.

The adjunct cultures that are tested:
- -
- 0.5% *Leuconostoc mesenteroides* FCDF4007 and 0.3% *Lactococcus lactis* FCDF0201
- 0.9% *Leuconostoc mesenteroides* FCDF4007 and 0.1% *Lactococcus lactis* FCDF0201
- 0.1% *Leuconostoc mesenteroides* FCDF4007 and 0.9% *Lactococcus lactis* FCDF0201
- 1% *Lactococcus lactis* FCDF0201 (prt-)
- 1 % *Lactococcus* lactis FCDF0381 (prt-, cps+)
- 2% *Lactococcus lactis* FCDF0201
- 1% *Lactococcus* lactis subsp. *lactis* FCDF0684 (prt-/+, commercial starter culture)
- 1% *Lactococcus lactis* subsp. *cremoris* FCDF0685 (prt-, commercial starter culture)
- 1 % *Lactococcus lactis* subsp. *cremoris* FCDF0642 (prt-, commercial starter culture)

| Milk: | | | | |
|---|---|---|---|---|
| | Cream | Tapte | Water | productmilk |
| Fat (%) | 43.39 | 0.05 | 0 | 1.61 |
| Protein (%) | 1.81 | 3.61 | 0 | 3.54 |
| Amount | 3.3584 | 89.8070 | 0.1346 | 93.3 |

| Culturing: | |
|---|---|
| Variant | Acidification time (h) |
| 11 | 18.5 |
| 12 | 21 |
| 13 | 18.75 |
| 14 | 15.75 |
| 15 | 15.75 |
| 16 | 20.75 |
| 17 | 20.5 |
| 18 | 15.5 |
| 19 | 15.5 |
| 20 | 15.5 |

| Posthumus-viscosity at day 1 at 20°C: | | | |
|---|---|---|---|
| variant | 1 (sec) | 2 (sec) | Average (sec) |
| 11 | 147 | 118 | 133 |
| 12 | 67 | 54 | 61 |
| 13 | 54 | 49 | 52 |
| 14 | 27 | 23 | 25 |
| 15 | 24 | 21 | 23 |
| 16 | 36 | 29 | 33 |
| 17 | 38 | 31 | 35 |
| 18 | 23 | 20 | 22 |
| 19 | 48 | 43 | 46 |
| 20 | 26 | 24 | 25 |

| pH in time: | | | | | | | |
|---|---|---|---|---|---|---|---|
| variant | pH after 14 h culturing | pH after filling | pH day 1 | pH 1 week | pH 2 weeks | pH 3 weeks | pH 4 weeks |
| 11 | 4.66 | 4.48 | 4.49 | 4.38 | 4.33 | 4.27 | 4.28 |
| 12 | 4.65 | 4.50 | 4.52 | 4.46 | 4.43 | 4.38 | 4.4 |
| 13 | 4.55 | 4.49 | 4.49 | 4.45 | 4.42 | 4.38 | 4.41 |
| 14 | 4.46 | 4.44 | 4.45 | 4.42 | 4.40 | 4.37 | 4.39 |
| 15 | 4.49 | 4.42 | 4.44 | 4.37 | 4.38 | 4.37 | 4.36 |
| 16 | 4.61 | 4.48 | 4.44 | 4.31 | 4.27 | 4.22 | 4.24 |
| 17 | 4.62 | 4.44 | 4.47 | 4.35 | 4.30 | 4.23 | 4.25 |
| 18 | 4.37 | 4.36 | 4.39 | 4.33 | 4.32 | 4.26 | 4.30 |
| 19 | 4.31 | 4.30 | 4.29 | 4.24 | 4.22 | 4.19 | 4.21 |
| 20 | 4.39 | 4.34 | 4.34 | 4.28 | 4.25 | 4.21 | 4.22 |

| Sensoric analysis at day 1 and day 21: | | |
|---|---|---|
| Variant | Day 1 | Day 21 |
| 11 | Good reference yoghurt | Good reference yoghurt |
| 12 | Twinkling, buttermilk flavour, no option | Not tested |
| 13 | Twinkling, buttermilk flavour, no option | Not tested |
| 14 | Some off taste (buttermilk) | Reasonable quark yoghurt, no option because product changes too much during storage |
| 15 | Slightly too thin, good flavour | Good quark yoghurt, selected for pilot plant production |
| 16 | Good flavour but too long | Too long structure |
| 17 | Good flavour, slightly too long | Too long structure |
| 18 | Good flavour and mouthfeel, slightly too thin | Good quark yoghurt, selected for pilot plant production |
| 19 | Very thick, too long | Not tested |
| 20 | Good flavour, slightly to thin | Some off taste |

| Microbiological analysis at day 1 | | | | |
|---|---|---|---|---|
| variant | *St. thermophilus* | *Lb. bulgaricus* | *L. lactis* | *leuconostoc* |
| 11 | 1.6 * 10⁹ | 3.3 * 10⁶ | ND | ND |
| 12 | 6.8 * 10⁸ | 1.2 * 10⁶ | 8.4 * 10⁶ | 2.6 * 10⁷ |
| 13 | 3.9 * 10⁸ | 2.4 * 10⁵ | 3.8 * 10⁸ | 1.7*10⁷ |
| 14 | 3.1 * 10⁸ | 1.8 * 10⁵ | 4.0 * 10⁸ | ND, < 10⁶ |
| 15 | 3.1 * 10⁸ | 2.2 * 10⁵ | 4.3 * 10⁸ | ND |
| 16 | 7.1 * 10⁸ | 1.5 * 10⁶ | 3.7 * 10⁶ | ND |
| 17 | 5.4 * 10⁸ | 6.2 * 10⁵ | 6.1 * 10⁵ | ND |
| 18 | 3.1 * 10⁷ | 4.8 * 10⁵ | 2.9 * 10⁸ | ND |
| 19 | 3.4 * 10⁸ | 5.2 * 10⁵ | 1.1 * 10⁶ | ND |
| 20 | 4.1 * 10⁸ | 5.7 * 10⁵ | 9.0 * 10⁷ | ND |
| ND: not detected | | | | |

| Microbiological analysis at day 21 | | | | |
|---|---|---|---|---|
| variant | *St. thermophilus* | *Lb. bulgaricus* | *L. lactis* | *leuconostoc* |
| 11 | 6.0 * 10⁸ | 1.1 * 10⁶ | ND | ND |
| 14 | 3.5 * 10⁸ | 1.3 * 10⁵ | 1.0 * 10⁶ | 5.8 * 10⁵ |
| 15 | 3.3 * 10⁸ | 1.2 * 10⁵ | 6.4 * 10⁴ | ND |
| 16 | 8.3 * 10⁸ | 1.2 * 10⁶ | 1.6 * 10⁵ | ND |
| 17 | 1.2 * 10⁹ | 6.9 * 10⁵ | 7.0 * 10³ | ND |
| 18 | 2.8 * 10⁸ | 3.9 * 10⁵ | 9.2 * 10⁶ | ND |
| 20 | 1.8 * 10⁹ | 5.8 * 10⁵ | 8.0 * 10³ | ND |
| ND: not detected | | | | |

### Serum:

The amount of serum was negligible. Only for variants 4 and 9 some serum was found, about 1-2 mm for a product height of 9 cm.

### Experiment III.

The desired product is also obtained by the addition of a mesophilic multiple strain starter culture, containing a mixture of at least *Lactococcus lactis* subsp. *lactis* and *Lactococcus lactis* subsp. *cremoris.*

### References

Chander, H., Batish, V.K., Mohan, M., Chand, R., and Singh, R.S. (1992). Effect of heat processing on bacterial quality of dahi-an Indian fermented dairy product. Cultured Dairy Products Journal, 27(2) 8-9.
Marshall, V.M.E. (1984) Flavour development in fermented milks, in Advances in the Microbiology and Biochemistry of Cheese and Fermented Milk, 1st edn (eds F.L. Davies and B.A. Law), Elsevier Applied Science Publishers, London, pp. 153-186.
Ra 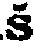 i 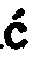 , J.L. and Kurmann, J.A. (1978). *Yoghurt-Scientific Grounds, Technology, Manufacture and Preparations,* Technical Dairy Publishing House, Copenhagen.
Renner, E. and Renz-Schauen, A. (1992). Nährwerttabellen für Milch und Milchprodukte. Verlag M. Drathen, Giessen, Germany.
Posthumus, G. (1954) In: Officieel orgaan FNZ 46; 55-56.

## Claims

1. Use of a yoghurt producing culture and a quark producing culture, for converting a starter medium into a dairy product having a taste like the taste of a composition which has been produced by mixing yoghurt and quark, which have been separately produced, in a ratio of between 1:10 and 10:1 wherein said yoghurt producing culture comprises *Streptococcus thermophilus* and *Lactobacillus delbrueckii* spp *bulgaricus* and wherein said quark producing culture comprises *Lactococcus lactis.*

2. Use according to claim 1, wherein said starter medium comprises pasteurized milk.

3. Use according to any one of claims 1-2, wherein said yoghurt producing culture and said quark producing culture are essentially simultaneously administered to said starter medium.

4. Use according to any one of claims 1-2, wherein said starter medium is firstly provided with said yoghurt producing culture and subsequently with said quark producing culture.

5. Use according to any one of claims 1-2, wherein said starter medium is firstly provided with said quark producing culture and subsequently with said yoghurt producing culture.

6. Use according to any one of claims 1-5, wherein said dairy product is provided with at least one additional probiotic strain and/or rennet.

7. Use according to any one of claims 1-6, wherein said dairy product is of a liquid type.

8. Use according to any one of claims 1-7, wherein said dairy product is exposed to shear in the presence of a gel-forming agent such as pectin, alginate and/or starch.

9. Use according to any one of claims 1-8, wherein said starter medium is fermented at a temperature which is suitable for the production of yoghurt.

10. Use according to any one of claims 1-9, wherein said starter medium is fermented at a temperature of 30-37°C.

11. Use according to any one of claims 1-10, wherein said starter medium is fermented at a temperature of 32°C.

12. Use according to any one of claims 1-11, wherein said starter medium is fermented at a temperature which is suitable for the production of quark.

13. Use according to any one of claims 1-12, wherein said starter medium is fermented at a temperature of 20-30°C.

## Patentansprüche

1. Verwendung einer Joghurt erzeugenden Kultur und einer Quark erzeugenden Kultur zur Umwandlung eines Startermediums in ein Milchprodukt mit einem ähnlichen Geschmack wie der Geschmack einer Zusammensetzung, die durch Mischen von Joghurt und Quark hergestellt wurde, die separat in einem Verhältnis zwischen 1:10 und 10:1 hergestellt wurden, wobei die Joghurt erzeugende Kultur *Streptococcus thermophilus* und *Lactobacillus delbrueckii spp bulgaricus* umfasst, und wobei die Quark erzeugende Kultur *Lactococcus lactis* umfasst.

2. Verwendung nach Anspruch 1, wobei das Startermedium pasteurisierte Milch umfasst.

3. Verwendung nach einem der Ansprüche 1-2, wobei die Joghurt erzeugende Kultur und die Quark erzeugende Kultur dem Startermedium im Wesentlichen gleichzeitig zugegeben werden.

4. Verwendung nach einem der Ansprüche 1-2, wobei das Startermedium zuerst mit der Joghurt erzeugenden Kultur und anschließend mit der Quark erzeugenden Kultur versehen wird.

5. Verwendung nach einem der Ansprüche 1-2, wobei das Startermedium zuerst mit der Quark erzeugenden Kultur und anschließend mit der Joghurt erzeugenden Kultur versehen wird.

6. Verwendung nach einem der Ansprüche 1-5, wobei das Milchprodukt mit mindestens einem probiotischen Bakterienstamm und/oder Rennin versehen wird.

7. Verwendung nach einem der Ansprüche 1-6, wobei das Milchprodukt von flüssiger Art ist.

8. Verwendung nach einem der Ansprüche 1-7, wobei das Milchprodukt in Anwesenheit eines gelbildenden Agens, wie Pectin, Alginat und/oder Stärke, einer Scherung ausgesetzt wird.

9. Verwendung nach einem der Ansprüche 1-8, wobei das Startermedium bei einer Temperatur, die für die Herstellung von Joghurt geeignet ist, fermentiert wird.

10. Verwendung nach einem der Anspruche 1-9, wobei das Startermedium bei einer Temperatur von 30-37 °C fermentiert wird.

11. Verwendung nach einem der Ansprüche 1-10, wobei das Startermedium bei einer Temperatur von 32 °C fermentiert wird.

12. Verwendung nach einem der Ansprüche 1-11, wobei das Startermedium bei einer Temperatur, die für die Herstellung von Quark geeignet ist, fermentiert wird.

13. Verwendung nach einem der Ansprüche 1-12, wobei das Startermedium bei einer Temperatur von 20-30 °C fermentiert wird.

## Revendications

1. Utilisation d'une culture de production de yaourt et d'une culture de production de fromage blanc, pour la conversion d'un milieu de départ en un produit laitier ayant un goût analogue au goût d'une composition qui a été produite par mélange d'un yaourt et d'un fromage blanc, qui ont été produits séparément, selon un rapport compris entre 1:10 et 10:1, dans laquelle ladite culture de production de yaourt comprend *Streptococcus thermophilus* et *Lactobacillus delbrueckii* spp *bulgaricus* et dans laquelle ladite culture de production de fromage blanc comprend *Lactococcus lactis.*

2. Utilisation selon la revendication 1, dans laquelle ledit milieu de départ comprend du lait pasteurisé.

3. Utilisation selon l'une quelconque des revendications 1 à 2, dans laquelle ladite culture de production de yaourt et ladite culture de production de fromage blanc sont administrées de façon sensiblement simultanée audit milieu de départ.

4. Utilisation selon l'une quelconque des revendications 1 à 2, dans laquelle ledit milieu de départ reçoit d'abord ladite culture de production de yaourt et, ensuite, ladite culture de production de fromage blanc.

5. Utilisation selon l'une quelconque des revendications 1 à 2, dans laquelle ledit milieu de départ reçoit d'abord ladite culture de production de fromage blanc et, ensuite, ladite culture de production de yaourt.

6. Utilisation selon l'une quelconque des revendications 1 à 5, dans laquelle ledit produit laitier reçoit au moins une souche probiotique supplémentaire et/ou une présure.

7. Utilisation selon l'une quelconque des revendications 1 à 6, dans laquelle ledit produit laitier est de type liquide.

8. Utilisation selon l'une quelconque des revendications 1 à 7, dans laquelle ledit produit laitier est exposé à un cisaillement en présence d'un agent de formation de gel tel qu'une pectine, un alginate et/ou un amidon.

9. Utilisation selon l'une quelconque des revendications 1 à 8, dans laquelle ledit milieu de départ est fermenté à une température qui est appropriée pour la production de yaourt.

10. Utilisation selon l'une quelconque des revendications 1 à 9, dans laquelle ledit milieu de départ est fermenté à une température comprise entre 30 et 37°C.

11. Utilisation selon l'une quelconque des revendications 1 à 10, dans laquelle ledit milieu de départ est fermenté à une température de 32°C.

12. Utilisation selon l'une quelconque des revendications 1 à 11, dans laquelle ledit milieu de départ est fermenté à une température qui est appropriée pour la production de fromage blanc.

13. Utilisation selon l'une quelconque des revendications 1 à 12, dans laquelle ledit milieu de départ est fermenté à une température comprise entre 20 et 30°C.
